# EUROPÄISCHE PATENTSCHRIFT

(11) **EP 4 343 461 B1**
(45) Veröffentlichungstag und Bekanntmachung des Hinweises auf die Patenterteilung: **25.06.2025**
(21) Anmeldenummer: 22197744.0
(22) Anmeldetag: 26.09.2022
(51) Int. Cl.: G05B 19/042, G06F 21/00

(54) **VERFAHREN, AUTOMATISIERUNGS-STATION UND VERFAHREN ZUM BETRIEB EINER AUTOMATISIERUNGS-STATION**
METHOD, AUTOMATION STATION AND METHOD FOR OPERATING AN AUTOMATION STATION
PROCÉDÉ, STATION D'AUTOMATISATION ET PROCÉDÉ DE FONCTIONNEMENT D'UNE STATION D'AUTOMATISATION

(43) Veröffentlichungstag der Anmeldung: 27.03.2024
(73) Patentinhaber: Siemens Aktiengesellschaft, 80333 München (DE)
(72) Erfinder: Dausend, Stefan, 92676 Eschenbach (DE); Gigler, Alexander Michael, 86836 Untermeitingen (DE); Thürauf, Daniel, 90616 Neuhof/Zenn (DE)
(74) Vertreter: Siemens Patent Attorneys

(56) Entgegenhaltungen:
- EP-A1- 1 653 308
- EP-B1- 1 224 510
- DE-U1- 202011 108 152

## Beschreibung

Die Erfindung betrifft ein Verfahren zur Wiederherstellung von Lizenz-Schlüsseln in einer modular aufgebauten Automatisierungs-Station umfassend eine Haupteinheit mit einem Rückwandbusanschluss und eine Mehrzahl an Modulen ebenfalls mit einem Rückwandbusanschluss, wobei die Module bzw. die Haupteinheit mit dem jeweiligen Rückwandbusanschluss über einen Rückwandbus miteinander kommunizieren, wobei die Module betrieben werden anhand eines Lizenzschlüssels eine an den jeweiligen Lizenzschlüssel geknüpfte Software basierte Funktionalität bereitzustellen, wobei nach einem Ersetzen eines Moduls durch ein Ersatz-Modul, bei welchem die Software basierte Funktionalität noch nicht freigeschaltet ist, ein Wiederherstellungs-Schritt durchlaufen wird.

Auch betrifft die Erfindung eine Automatisierungs-Station, ausgestaltet zur modularen Aufbauweise aus einer Haupteinheit mit einem Rückwandbaus-Anschluss und eine Mehrzahl an Modulen ebenfalls mit jeweils einem Rückwandbus-Anschluss, wobei die Module bzw. die Haupteinheit mit ihren jeweiligen Rückwandbus-Anschlüssen auf einen Rückwandbus angeordnet sind, wobei die Module ausgestaltet sind anhand eines Lizenz-Schlüssels eine an den jeweiligen Lizenz-Schlüssel geknüpfte Software basierte Funktionalität bereitzustellen.

Des Weiteren betrifft die Erfindung eine Engineering-Station, welche ausgestaltet ist, eine Automatisierungs-Station mit einer Haupteinheit und Modulen zu konfigurieren und zu parametrieren und ausgestaltet ist zum Erzeugen von SchlüsselDaten für Lizenz-Schlüssel, welche eine an den jeweiligen Lizenz-Schlüssel geknüpfte Software basierte Funktionalität eines Moduls freischaltet.

Im Sinne der Erfindung ist unter eine an den jeweiligen Lizenz-Schlüssel geknüpfte Software basierte Funktionalität folgendes zu verstehen:
Bei ein und derselben Software können durch unterschiedliche Lizenz-Schlüssel unterschiedliche Funktionen einzeln aktiviert werden. Grundfunktionen können sogar auch ganz ohne Lizenz-Schlüssel zugelassen werden. Durch unterschiedliche funktionsgebundene Lizenz-Schlüssel können Hersteller viele Funktionen in einem Produkt zusammenfassen und fein gestaffelt je nach Kundenbedarf auch zu einem späteren Zeitpunkt gegen Bezahlung freischalten.

Werden derartige Lizenz-Schlüssel in der Automatisierungstechnik eingesetzt, so müssen bei einem Ersatz einer defekten Komponente unabhängig von einer IT-Infrastruktur, insbesondere auch in abgelegenen Gebieten ohne Interruptverbindung, die Lizenz-Schlüssel für die Ersatzkompononte, vorzugsweise automatisch, wieder hergestellt werden. Nach dem heutigen Stand der Technik ist der Wiederherstellungsvorgang eines Lizenz-Schlüssels entweder nur mit einer durchgängig angeschlossenen IT-Infrastruktur möglich oder für abgelegene Gebiete ohne IT-Infrastruktur nur dadurch möglich, dass ein Inbetriebsetzer manuell über ein Programmiergerät z.B. ein Laptop, sich an das Automatisierungsgerät anschließt und die Ersatzkomponente mit dem passenden Lizenz-Schlüssel wieder versorgt, um die Funktionsfähigkeit herzustellen. Es ist hierzu allerdings ein erfahrener Mitarbeiter notwendig, der in der Benutzung der Tools unterwiesen ist

Die DE 20 2011 108152 U1 betrifft ein Verfahren zur Wiederherstellung von Lizenzschlüsseln in einer modular aufgebauten Automatisierungs-Station.

Die EP 1 224 510 B1 zeigt ein modular aufgebautes Automatisierungs-System mit einem Rückwandbus mit einem Kopfmodul und weiteren Modulen. Den weiteren Modulen ist jeweils eine Kennung zugeordnet, die beim oder vor dem Betrieb an das Kopfmodul zur Überprüfung übermittelt werden. Ist die Überprüfung einer Kennung nicht erfolgreich, kann das Automatisierungs-System nicht in Betrieb gehen.

Die EP 1 653 308 A1 zeigt ein System mit Rückwandbus zur Speicherung und Bereitstellung von komponentenbezogenen Lizenzierungsdaten.

Es ist Aufgabe der vorliegenden Erfindung ein Verfahren bzw. ein Automatisierungsgerät bereitzustellen, welches gewährleistet, dass nach Ersatz einer defekten Automatisierungskomponente die neue Automatisierungskomponente automatisch mit einem Lizenz-Schlüssel versorgt wird.

Die Aufgabe wird für das eingangs genannte Verfahren zur Wiederherstellung von Lizenzschlüsseln dadurch gelöst, dass ein

Lizenz-Schlüssel-Satz wieder hergestellt wird, wobei der Lizenzschlüssel-Satz alle Lizenzschlüssel der Module von der Automatisierungs-Station umfasst, zur Wiederherstellung des Lizenzschlüssel-Satzes werden ein erster Datenblock von einem ersten Speicherort der Automatisierungs-Station, ein zweiter Datenblock von einem zweiten Speicherort der Automatisierungs-Station und ein dritter Datenblock von einem dritten Speicherort der Automatisierungs-Station ausgelesen, wobei die Datenblöcke Datenanteile des Lizenzschlüssel-Satzes wie folgt aufweisen, der Lizenzschlüssel-Satz ist in einem ersten Teil und einem zweiten Teil zerteilt, wobei aus den beiden Teilen Paritätsinformationen gebildet sind und die Datenanteile und die Paritätsinformationen ausgewogen auf die Datenblöcke verteilt sind, wobei anhand der Paritätsinformationen der Lizenzschlüssel-Satz wieder hergestellt wird auch wenn nur zwei von den drei Datenblöcken gelesen werden konnten und der Lizenzschlüssel für die Software basierte Funktionalität des ersetzten Moduls dem Ersatz-Modul zugewiesen wird und damit die Software basierte Funktionalität dem Ersatz-Modul freigeschaltet wird.

Mit diesem Verfahren zur Wiederherstellung eines Lizenzschlüssels wird nicht nur ein Automatismus geschaffen, welcher in abgelegenen Gebieten durchgeführt werden kann, sondern es wird zusätzlich eine Ausfallsicherheit bereitgestellt. Denn durch den Speicherverbund des ersten Datenblocks, zweiten Datenblocks und dritten Datenblocks sind die Daten nicht nur in einer wiederherstellbaren Art und Weise abgelegt und gespeichert, sondern durch die Ablage mit Paritätsdaten stellt dieses Verfahren auch eine Ausfallsicherheit bereit, denn wenn beispielsweise ein Speicherort sich auch in einer Komponente befindet, die es gilt auszutauschen oder die ausgebrannt ist, so können die Lizenzschlüssel dennoch über die Datenblöcke in den beiden anderen Speicherorten aufgrund der verteilten Paritätsinformationen wieder hergestellt werden.

Bei einer Neuprojektierung bzw. bei einer Erweiterung des Systems wird noch immer ein entsprechender Satz von Lizenzschlüsseln für die Funktionalitäten der Stationen codiert und die entsprechenden, die Ausfallsicherheit ergebenen Datenblöcke mit den Paritätsdaten werden erzeugt und können an unterschiedlichen Orten abgelegt werden.

Für die eingangs genannte Automatisierungs-Station wird die Aufgabe dadurch gelöst, dass in der Automatisierungs-Station ein Wiederherstellungsmittel vorhanden ist, welches ausgestaltet ist nach einem Ersetzen eines Moduls durch ein Ersatz-Modul, bei welchem die Software basierte Funktionalität noch nicht freigeschaltet ist, dass Ersatz-Modul ohne einen gültigen Lizenzschlüssel zu erkennen und daraufhin einen Wiederherstellungs-Schritt zu durchlaufen, dazu sind an unterschiedlichen physikalischen Orten ein erster Speicherort, ein zweiter Speicherort und ein dritten Speicherort an oder innerhalb der Automatisierungs-Station angeordnet, wobei das Wiederherstellungsmittel dazu ausgestaltet ist, einen Lizenzschlüssel-Satz wieder herzustellen, wobei der Lizenzschlüssel-Satz alle Lizenzschlüssel der Module von der Automatisierungs-Station umfasst, zur Wiederherstellung des Lizenzschlüssel-Satzes ist das Wiederherstellungsmittel ausgestaltet, einen ersten Datenblock von dem ersten Speicherort, einen zweiten Datenblock von dem zweiten Speicherort oder einen dritten Datenblock von dem dritten Speicherort auszulesen, wobei die Datenblöcke Datenanteile des Lizenzschlüssel-Satzes wie folgt aufweisen:
Der Lizenzschlüssel-Satz ist in einen ersten Teil mit Datenanteilen und einen zweiten Teil mit Datenanteilen zerteilt, wobei aus den beiden Teilen Paritätsinformationen gebildet sind und die Datenanteile und die Paritätsinformationen ausgewogen auf die Datenblöcke verteilt sind, wobei anhand der Paritätsinformationen der Lizenzschlüssel-Satz wieder hergestellt wird auch wenn nur zwei von den drei Datenblöcken gelesen werden konnten und der aus dem Lizenzschlüssel-Satz zurückgewonnene Lizenzschlüssel für die Software basierte Funktionalität des ersetzten Moduls dem Ersatzmodul zugewiesen wird und damit die Software basierte Funktionalität in dem Ersatzmodul freigeschaltet ist.

Mit Vorteil weist die Automatisierungs-Station eine Feldbusschnittstelle auf, welche ausgestaltet ist zum Anschluss an ein übergeordnetes Automatisierungssystem oder an eine Engineering-Station, wobei die Haupteinheit ausgestaltet ist den Lizenzschlüssel-Satz und/oder die Datenblöcke zu empfangen und abzuspeichern.

Automatisierungsstationen werden typischerweise mittels eines Engineeringsystems bzw. einer Engineeringstation projektiert und parametriert. Damit ein auf Software basiertes Verhalten und eine Funktionalität angeboten werden kann, werden in dem Engineeringsystem den Baugruppen oder Modulen oder den ganzen Stationen neben den Projektierungsdaten und den Parametrierungsdaten auch Lizenzdaten zur Verfügung gestellt. Damit eine Zusage für einfaches Ersetzen von Baugruppen eingehalten werden kann, ist es notwendig, dass auch bei einem Ausfall einer oder weniger Baugruppen nach einem Tausch der defekten Teile wieder das Gesamtsystem in einer ursprünglichen Form funktioniert. Die hierzu notwendigen Lizenzschlüssel sind, wie zuvor dargestellt, in einer wiederherstellbaren Art und Weise abgelegt worden.

Ein Erzeugen von Lizenzschlüssel und eine Codierung für ein Automatisierungssystem erfolgt mittels der Engineeringstation bei der Projektierung und/oder Neueinrichtung des Systems. Da dem Tool bzw. der Engineeringstation alle Baugruppen und lizenzierte Funktionalitäten der Anlage bekannt sind, können hier auch die Schlüsseldaten in optimaler Weise mit Paritätsdaten in zumindest drei Datenblöcken verteilt werden.

Um dies zu erreichen, wird für das eingangs genannte Verfahren zum Betrieb einer Engineering-Station in der Engineering-Station eine Datenbank abgefragt und aus der Datenbank werden die Informationen über die Projektierung und die Zugehörigkeit der lizenzierten Funktionalitäten zu den Modulen gewonnen, wobei mit diesen Informationen ein Lizenzschlüssel-Satz erstellt wird, wobei der Lizenzschlüssel-Satz aller Lizenzschlüssel der Module von der Automatisierungs-Station umfasst, für eine spätere Wiederherstellung des Lizenzschlüssel-Satzes in der Automatisierungs-Station wird der Lizenzschlüssel-Satz in Datenanteile zerlegt, dabei wird der Lizenzschlüssel-Satz in einen ersten Teil und einen zweiten Teil zerteilt, wobei aus den beiden Teilen Paritätsinformationen gebildet werden und die Datenanteile und die Paritätsinformationen ausgewogen auf einen ersten Datenblock, einen zweiten Datenblock und einen dritten Datenblock verteilt werden, in einen Speicherschritt werden der erste Datenblock in einem ersten Speicherort der Automatisierungsstation, der zweite Datenblock in einem zweiten Speicherort der Automatisierungs-Station und der dritte Datenblock in einem dritten Speicherort der Automatisierungs-Station geschrieben.

Die Zeichnung zeigt ein Ausführungsbeispiel der Erfindung, dabei zeigt:
- FIG 1: einen beispielhaften Austauschvorgang bei einer Automatisierungsstation,
- FIG 2: das Aufteilen eines Lizenzschlüssel-Satzes mit der Bildung von Paritätsinformationen,
- FIG 3: einen Speicherverbund von drei Datenblöcken,
- FIG 4: exemplarisch eine Automatisierungs-Station mit modularen Baugruppen und
- FIG 5: eine Engineeringstation zum Bereitstellen von Lizenzschlüsseln und Datenblöcken.

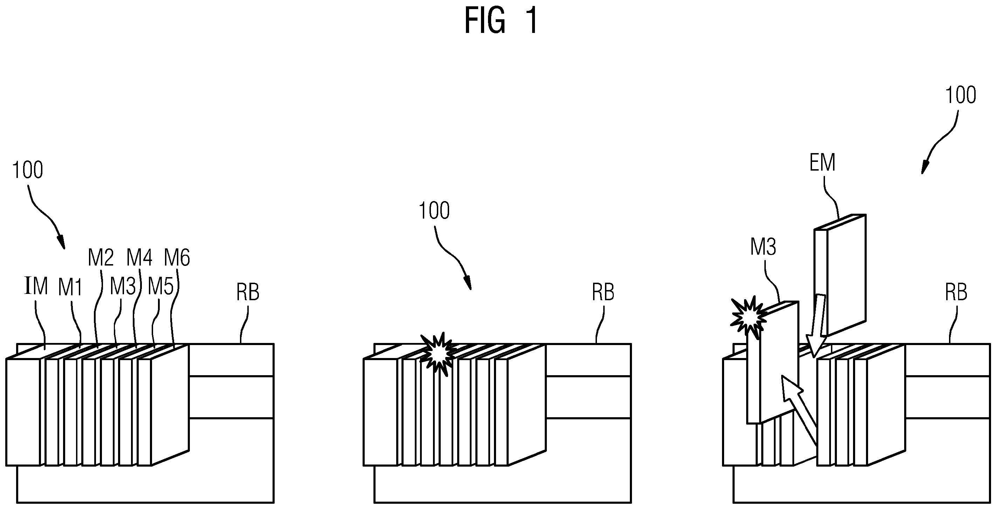

Die FIG 1 zeigt von links nach rechts eine Automatisierungs-Station 100 ausgestaltet zur modularen Aufbauweise aus einer Haupteinheit IM mit einem Rückwandbusanschluss und eine Mehrzahl an Modulen M1,...,M6, welche ebenfalls mit jeweils einem Rückwandbusanschluss ausgestaltet sind. Die Module M1,...,M6 bzw. die Haupteinheit IM sind angeordnet und ausgestaltet um über den Rückwandbus RB zu kommunizieren.

Die Haupteinheit IM wird auch als ein Interfacemodul bzw. als eine SPS-Steuerung bezeichnet. Ein erstes Modul M1 wäre beispielsweise ein erstes I/O-Modul, ein zweites Modul M2 wäre beispielsweise ein zweites I/O-Modul, ein drittes Modul M3 wäre beispielsweise ein drittes I/O-Modul und das vierte Modul M4 ist ebenfalls noch ein I/O-Modul, aber bei dem fünften Modul M5 handelt es sich um eine intelligente Funktionsbaugruppe und bei dem sechsten Modul M6 handelt es sich um ein Servermodul.

Eine derartige Automatisierungs-Station 100 aus Modulen M1,...,M6 werden geplant und mittels z.B. einer Engineeringstation oder bei einem Programmiergerät in Betrieb genommen. Manche Module M1,...,M6 sind per Software definiert, d.h. ihre Funktionalität hängt beispielsweise von einem Lizenzschlüssel ab.

Das mittlere Bild in FIG 1 zeigt das ein Modul aufgrund eines Schadens, z.B. einem Blitzschlag, ausfällt. Es wird ein Fehler angezeigt. Ein Operator muss ein passendes Ersatzteil besorgen. Diese Ersatzteile liegen beispielsweise in einem Lager zu welchen der Operator Zugang hat.

Das rechte Bild in FIG 1 zeigt den Austausch des dritten Moduls M3 gegen ein Ersatzmodul EM. Das Ersatzmodul EM ist nicht programmiert, da es ja aus dem Lager kommt und besitzt noch keinen Lizenzschlüssel.

Erfindungsgemäß durchläuft die Automatisierungs-Station 100 nun einen Re-Build oder Wiederherstellungsprozess, bei dem die Lizenzschlüssel aus Paritätsinformationen regeneriert werden. Der komplette Funktionsumfang für das Ersatzmodul EM, welche das dritte Modul M3 ersetzt, steht dann sofort wieder zur Verfügung.

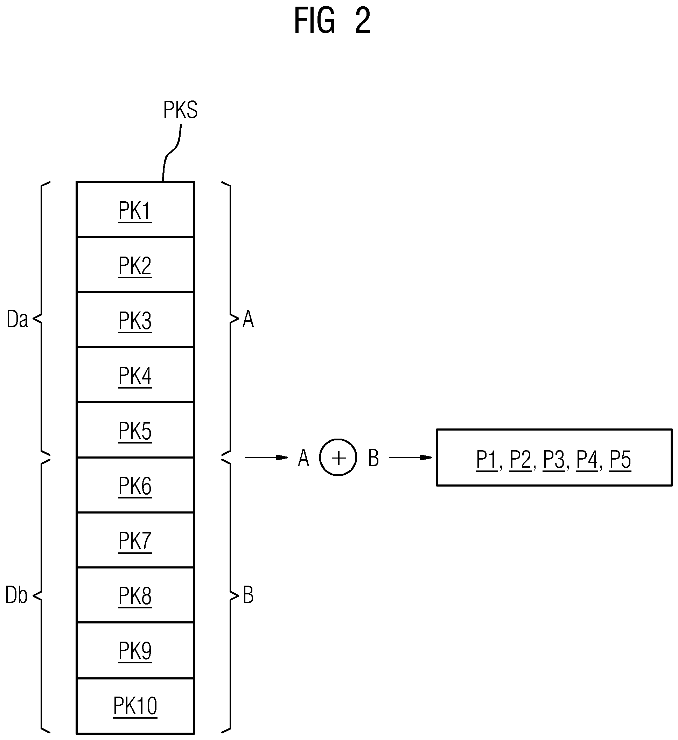

Mit der FIG 2 wird verdeutlicht, wie Paritätsinformationen aus einem Datensatz, nämlich dem Lizenzschlüssel-Satz PKS erzeugt werden. Der Lizenzschlüssel-Satz PKS enthält eine Anzahl von Lizenzen, nämlich einen ersten Lizenzschlüssel PK1 bis zu einen zehnten Lizenzschlüssel PK10. Der Lizenzschlüssel-Satz PKS wird mit den Lizenzschlüsseln PK1,...,PK5 in einen ersten Teil A und mit den Lizenzschlüsseln PK6,...,PK10 in einen zweiten Teil B aufgeteilt. Aus den beiden Teilen A,B werden Paritätsinformationen P1,P2,P3,P4,P5 mittels einer X-OR-Verknüpfung erzeugt.

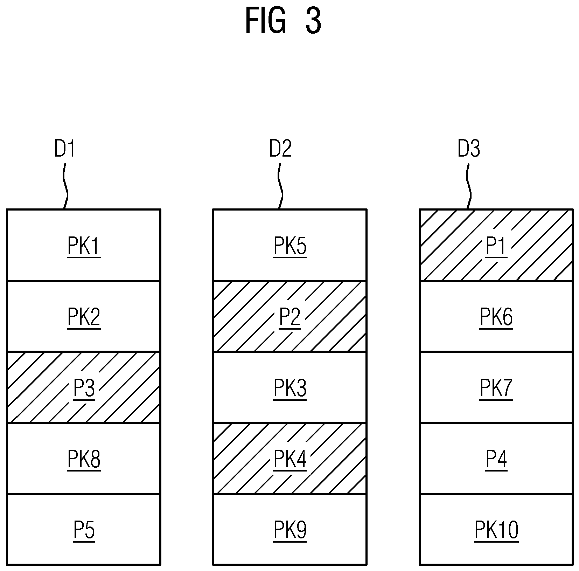

FIG 3 zeigt die ausgewogene Verteilung der Datenanteile Da,Db und der Paritätsinformationen P1,P2,P3,P4 auf einen ersten Datenblock 1, einen zweiten Datenblock 2 und einen dritten Datenblock 3.

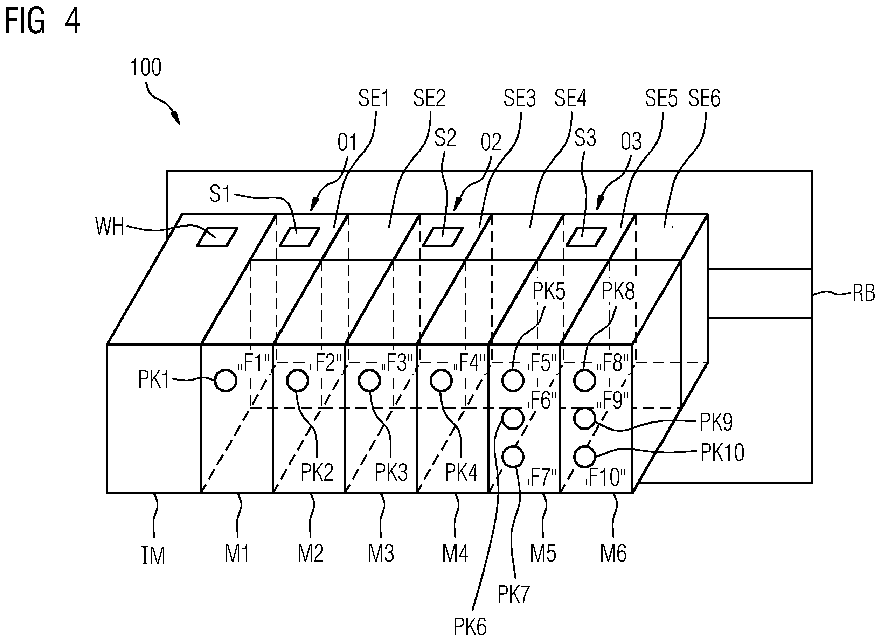

Mit der FIG 4 ist exemplarisch ein Automatisierungssystem 100 mit einer Haupteinheit IM und sechs Modulen M1,...,M6 dargestellt. Bei dieser Darstellung sind die Module M1,...,M6 in Sockeleinheiten SE1,...,SE6 angeordnet. Derartige Sockeleinheiten SE1,..,SE6 werden auch Terminal-Units genannt, in welche Module eingesteckt werden können.

Die Haupteinheit IM weist ein Wiederherstellungsmittel WH auf, welches ausgestaltet ist, nach einem Ersetzen eines Moduls M3 (siehe FIG 1) durch ein Ersatzmodul EM. Für dieses Ersatzmodul EM die Lizenz wieder herzustellen.

Mittels einer Engineering-Station 201 (siehe FIG 4) wurde der Automatisierungs-Station 100 folgende Konfigurationen zugewiesen. Das erste Modul M1 erhält mit dem ersten Lizenzschlüssel PK1 eine Funktionalität F1, das zweite Modul M2 erhält mit dem zweiten Lizenzschlüssel PK2 eine Funktionalität F2, das dritte Modul M3 erhält mit den dritten Lizenzschlüssel PK3 eine Funktionalität F3, das vierte Modul M4 erhält mit dem vierten Lizenzschlüssel PK4 eine vierte Funktionalität F4. Da die Module M1,...,M4 ähnliche I/O-Module sind, sind für dessen Funktionalität jeweils nur ein Lizenzschlüssel PK1,PK2,PK3 notwendig. Die Module M5 und M7 sind smarte Funktionsmodule bzw. Servermodule, welche mehrere Lizenzschlüssel benötigen. Dazu weist das fünfte Modul M5 als smartes Funktionsmodul einen fünften Lizenzschlüssel PK5 für eine fünfte Funktionalität, einen sechsten Lizenzschlüssel PK6 für eine sechste Funktionalität und einen siebten Lizenzschlüssel PK7 für eine siebte Funktionalität auf. Ebenfalls benötigt das sechste Modul M6 als Servermodul drei weitere Lizenzschlüssel PK8,PK9,PK10, welche dementsprechend eine achte Funktionalität F8, eine neunte Funktionalität F9 und eine zehnte Funktionalität F10 bereitstellen.

Um auch eine Ausfallsicherheit bereitzustellen, sind die drei Datenblöcke 1,2,3 an unterschiedlichen Orten 01,02,03 in dem Automatisierungssystem 100 abgespeichert. Das erste Automatisierungsmodul M1 stellt mit der ersten Sockeleinheit SE1 einen ersten Ort O1 für die Abspeicherung in den ersten Speicherort S1 bereit. Das dritte Modul M3 stellt mit der dritten Sockeleinheit SE3 einen zweiten Ort E2 für einen zweiten Speicherort S2 für den zweiten Datenblock 2 bereit und das fünfte Modul M5 stellt mit seiner fünften Sockeleinheit SE5 einen dritten Ort O3 für einen dritten Speicherort S3 für den dritten Datenblock 3 bereit. Sollte nun durch Blitzschlag das erste Modul M1 und auch seine Sockeleinheit SE1 zerstört werden, so können aufgrund der Paritätsinformationen aus dem zweiten Datenblock 2 in dem zweiten Speicherort S2 und dem dritten Datenblock 3 in dem dritten Speicherort S3 der gesamte Lizenzschlüssel-Satz PKS mittels des Wiederherstellungsmittel WH wieder herstellt werden und aus dem Lizenzschlüssel-Satz PKS kann der erste Lizenzschlüssel PK1 für die erste Funktion F1 für das Ersatzmodul EM wieder hergestellt werden.

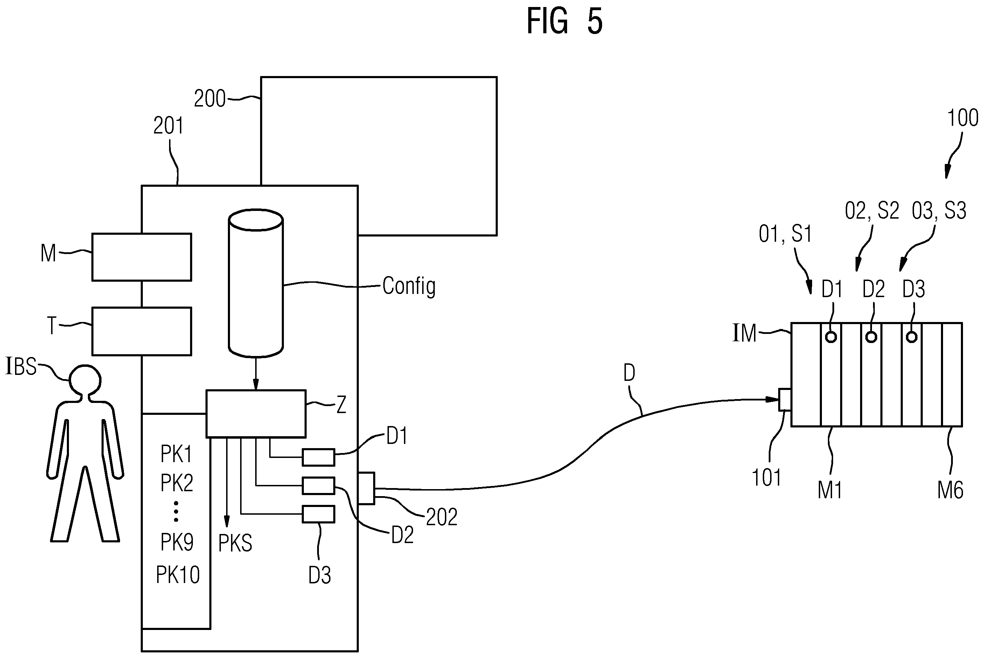

Die FIG 5 zeigt die bereits erwähnte Engineering-Station 201, welche ausgestaltet ist, die Automatisierungs-Station 100 mit der Haupteinheit IM und den Modulen M1,...,M6 zu konfigurieren und zu parametrieren. Einem Inbetriebsetzer IBS steht an der Engineering-Station 201 eine Tastatur T und ein Monitor M für die Konfiguration zur Verfügung. Zusätzlich ist die Engineering-Station 201 zum Erzeugen von Schlüsseldaten für die Lizenzschlüssel PK1,...,PK10 ausgestaltet. Die Lizenzschlüssel PK1,...,PK10 garantieren, dass eine Software basierte Funktionalität F1,..,F10 auf den Modulen M1,...,M6 freigeschaltet wird.

In der Engineering-Station 201 wird mittels eines Zuordnungsmittels Z eine Datenbank Config abgefragt und aus der Datenbank Config werden die Informationen über die Projektierung und die Zugehörigkeit der lizenzierten Funktionalitäten F1,...,F10 zu den Modulen M1,...,M6 gewonnen. Mit diesen Informationen wird ein Lizenzschlüssel-Satz PKS bereitgestellt. Der Lizenzschlüssel-Satz PKS enthält alle Lizenzschlüssel PK1,...,PK10 der Module M1,...,M6 von der Automatisierungs-Station 100. Für eine spätere Wiederherstellung des Lizenzschlüssel-Satzes PKS in der Automatisierungs-Station 100 wird der Lizenzschlüssel-Satz PKS in Datenanteile Da,Db zerlegt, dabei wird der Lizenzschlüssel-Satz PKS in einen ersten Teil A und einen zweiten Teil B zerteilt, wobei aus den beiden Teilen A,B Paritätsinformationen P1,P2,P3,P4 gebildet werden. Die Datenanteile Da,Db und die Paritätsinformationen P1,P2,P3,P4 werden ausgewogen aus einem ersten Datenblock 1, einem zweiten Datenblock 2 und einen dritten Datenblock 3 verteilt.

In einem Speicherschritt D oder einem Download-Prozess wird der erste Datenblock 1 in einem ersten Speicherort S1 der Automatisierungs-Station 100 geschrieben. Der zweite Datenblock 2 wird in einem zweiten Speicherort S2 geschrieben und der dritte Datenblock 3 wird in einem dritten Speicherort S3 geschrieben.

## Patentansprüche

1. Verfahren zur Wiederherstellung von Lizenzschlüsseln (PK1,...,PK10) in einer modular aufgebauten Automatisierungs-Station (100) umfassend eine Haupteinheit (IM) mit einem Rückwandbusanschluss und eine Mehrzahl an Modulen (M1,...,M6) ebenfalls mit jeweils einem Rückwandbusanschluss, wobei die Module (M1,...,M6) bzw. die Haupteinheit (IM) mit dem jeweiligen Rückwandbusanschluss über einen Rückwandbus (RB) miteinander kommunizieren, wobei die Module (M1,...,M6) betrieben werden anhand eines Lizenzschlüssels (PK1,...,PK10) eine an den jeweiligen Lizenzschlüssel (PK1,...,PK10) geknüpfte Software basierte Funktionalität (F1,...,F10) bereitzustellen, wobei nach einem Ersetzen eines Moduls (M3) durch ein Ersatz-Modul (EM), bei welchem die Software basierte Funktionalität (F3) noch nicht freigeschaltet ist, ein Wiederherstellungs-Schritt durchlaufen wird,
**dadurch gekennzeichnet, dass** ein Lizenzschlüssel-Satz (PKS) wiederhergestellt wird, wobei der Lizenzschlüssel-Satz (PKS) alle Lizenzschlüssel (PK1,...,PK10) der Module (M1,...,M6) von der Automatisierungs-Station (100) umfasst, zur Wiederherstellung des Lizenzschlüssel-Satzes (PKS) werden ein erster Datenblock (1) von einem ersten Speicherort (S1) der Automatisierungs-Station (100), ein zweiter Datenblock (2) von einem zweiten Speicherort (S1) der Automatisierungs-Station (100) und ein dritter Datenblock (3) von einem dritten Speicherort (S1) der Automatisierungs-Station (100) ausgelesen, wobei die Datenblöcke (1,2,3) Datenanteile (Da,Db) des Lizenzschlüssel-Satzes (PKS) wie folgt aufweisen, der Lizenzschlüssel-Satz (PKS) ist in einen ersten Teil (A) und einen zweiten Teil (B) zerteilt, wobei aus den beiden Teilen (A,B) Paritätsinformationen (P1,P2,P3,P4) gebildet sind und die Datenanteile (Da,Db) und die Paritätsinformationen (P1,P2,P3,P4) ausgewogen auf die Datenblöcke (1,2,3) verteilt sind, wobei anhand der Paritätsinformationen der Lizenzschlüssel-Satz (PKS) wiederhergestellt wird auch wenn nur zwei von den drei Datenblöcken (1,2,3) gelesen werden konnten und der Lizenzschlüssel (PK3) für die Software basierte Funktionalität (F3) des ersetzten Moduls (M3) dem Ersatz-Modul (EM) zugewiesen wird und damit die die Software basierte Funktionalität (F1) im Ersatz-Modul (EM) freigeschaltet wird.

2. Automatisierungs-Station (100) ausgestaltet zur modularen aufbauweise aus einer Haupteinheit (IM) mit einem Rückwandbusanschluss und eine Mehrzahl an Modulen (M1,...,M6) ebenfalls mit jeweils einem Rückwandbusanschluss, wobei die Module (M1,...,M6) bzw. die Haupteinheit (IM) mit dem jeweiligen Rückwandbusanschluss auf einem Rückwandbus (RB) angeordnet sind, wobei die Module (M1,...,M6) ausgestaltet sind anhand eines Lizenzschlüssels (PK1,...,PK10) eine an den jeweiligen Lizenz-schlüssel (PK1,...,PK10) geknüpfte Software basierte Funktionalität (F1,...,F10) bereitzustellen,
**gekennzeichnet , durch**
ein Wiederherstellungsmittel (WH), welches ausgestaltet ist nach einem Ersetzen eines Moduls (M3) **durch** ein Ersatz-Modul (EM), bei welchem die Software basierte Funktionalität (F3) noch nicht freigeschaltet ist, das Ersatz-Modul (EM) ohne einen gültigen Lizenzschlüssel (PK1,...,PK10) zu erkennen und daraufhin einen Wiederherstellungs-Schritt zu durchlaufen, dazu sind an unterschiedlichen physikalischen Orten (01,02,03) ein erster Speicherort (S1), ein zweiter Speicherort (S1) und ein dritter Speicherort (S1) an oder innerhalb der Automatisierungs-Station (100) angeordnet,
wobei das Wiederherstellungsmittel (WH) ausgestaltet ist einen Lizenzschlüssel-Satz (PKS) wieder herzustellen, wobei der Lizenzschlüssel-Satz (PKS) alle Lizenzschlüssel (PK1,...,PK10) der Module (M1,...,M6) von der Automatisierungs-Station (100) umfasst, zur Wiederherstellung des Lizenzschlüssel-Satzes (PKS) ist das Wiederherstellungsmittel (WH) ausgestaltet einen ersten Datenblock (1) von dem ersten Speicherort (S1), einen zweiten Datenblock (2) von dem zweiten Speicherort (S1) oder einen dritten Datenblock (3) von dem dritten Speicherort auszulesen, wobei die Datenblöcke (1,2,3) Datenanteile (Da,Db) des Lizenzschlüssel-Satzes (PKS) wie folgt aufweisen: der Lizenzschlüssel-Satz (PKS) ist in einen ersten Teil (A) und einen zweiten Teil (B) zerteilt, wobei aus den beiden Teilen (A,B) Paritätsinformationen (P1,P2,P3,P4) gebildet sind und die Datenanteile (Da,Db) und die Paritätsinformationen (P1,P2,P3,P4) ausgewogen auf die Datenblöcke (1,2,3) verteilt sind, wobei anhand der Paritätsinformationen der Lizenzschlüssel-Satz (PKS) wiederherstellbar ist, auch wenn nur zwei von den drei Datenblöcken (1,2,3) gelesen werden konnten und der aus dem Lizenzschlüssel-Satz (PKS) zurückgewonnene Lizenzschlüssel (PK3) für die Software basierte Funktionalität (F3) des ersetzten Moduls (M3) dem Ersatz-Modul (EM) zugewiesen wird und damit die die Software basierte Funktionalität (F1) in dem Ersatz-Modul (EM) freigeschaltet ist.

3. Automatisierungs-Station (100) nach Anspruch 2, aufweisend eine Feldbusschnittstelle (101) ausgestaltet zum Anschluss an ein übergeordnetes Automatisierungs-System (200) oder an eine Engineering-Station (201), wobei die Haupteinheit (IM) ausgestaltet ist den Lizenzschlüssel-Satz (PKS) und/oder die Datenblöcke (1,2,3) zu empfangen und abzuspeichern.

4. Verfahren zum Betrieb einer Engineering-Station (201), welche ausgestaltet ist eine Automatisierungs-Station (100) mit einer Haupteinheit (IM) und Modulen **(M1,...,M6)** zu Konfigurieren und zu Parametrieren und ausgestaltet ist zum Erzeugen von Schlüsseldaten für Lizenzschlüssel (PK1,...,PK10), welche eine an den jeweiligen Lizenzschlüssel (PK1,...,PK10) geknüpfte Software basierte Funktionalität (F1,...,F10) eines Moduls (M1,...,M6) freischaltet, wobei in der Engineering-Station (201) eine Datenbank (Config) abgefragt wird und aus der Datenbank (Config) die Informationen über die Projektierung und die Zugehörigkeit der lizenzierten Funktionalitäten (F1,...,F10) zu den Module (M1,...,M6) gewonnen wird, wobei mit diesen Informationen ein Lizenzschlüssel-Satz (PKS) erstellt wird, wobei der Lizenzschlüssel-Satz (PKS) alle Lizenzschlüssel (PK1,..,PK10) der Module (M1,...,M6) von der Automatisierungs-Station (100) umfasst, für eine spätere Wiederherstellung des Lizenzschlüssel-Satzes (PKS) in der Automatisierungs-Station (100) wird der Lizenzschlüssel-Satz (PKS) in Datenanteile (Da,Db) zerlegt, dabei wird der Lizenzschlüssel-Satz (PKS) in einen ersten Teil (A) und einen zweiten Teil (B) zerteilt, wobei aus den beiden Teilen (A,B) Paritätsinformationen (P1,P2,P3,P4) gebildet werden und die Datenanteile (Da,Db) und die Paritätsinformationen (P1,P2,P3,P4) ausgewogen auf einen ersten Datenblock (1), einen zweiten Datenblock (2) und einen dritten Datenblock (3) verteilt werden, in einem Speicherschritt (D) werden
der erste Datenblock (1) in einem ersten Speicherort (S1) der Automatisierungs-Station (100),
der zweite Datenblock (2) in einem zweiten Speicherort (S2) der Automatisierungs-Station (100) und
der dritter Datenblock (3) in einem dritten Speicherort (S3) der Automatisierungs-Station (100) geschrieben.

## Claims

1. Method for restoring license keys (PK1,...,PK10) in a modular automation station (100) comprising a main unit (IM) with a backplane bus connection and a plurality of modules (M1,...,M6) similarly with a backplane bus connection, wherein the modules (M1,...,M6) or the main unit (IM) with the respective backplane bus connection communicate with one another via a backplane bus (RB), wherein the modules (M1,...,M6) are operated by means of a license key (PK1,...,PK10) to provide a software-based functionality (F1,...,F10) tied to the respective license key (PK1,...,PK10), wherein after a module (M3) is replaced with a replacement module (EM), in which the software-based functionality (F3) is not yet enabled, a restoration step is carried out,
**characterised in that** a license key set (PKS) is restored, wherein the license key set (PKS) comprises all license keys (PK1,...,PK10) of the modules (M1,...,M6) of the automation station (100), for restoring the license key set (PKS), a first data block (1) is read from a first storage location (S1) of the automation station (100), a second data block (2) is read from a second storage location (S1) of the automation station (100) and a third data block (3) is read from a third storage location (S1) of the automation station (100), wherein the data blocks (1,2,3) comprise data portions (Da,Db) of the license key set (PKS) as follows, the license key set (PKS) is divided into a first part (A) and a second part (B), wherein parity information (P1,P2,P3,P4) is formed from the two parts (A,B) and the data portions (Da,Db) and the parity information (P1,P2,P3,P4) are distributed in a balanced manner over the data blocks (1,2,3), wherein the license key set (PKS) is restored on the basis of the parity information even if only two of the three data blocks (1,2,3) could be read and the license key (PK3) for the software-based functionality (F3) of the replaced module (M3) is assigned to the replacement module (EM) and thus the software-based functionality (F1) is enabled for the replacement module (EM).

2. Automation station (100) designed for modular construction from a main unit (IM) with a backplane bus connection and a plurality of modules (M1,...,M6) each similarly with a backplane bus connection, wherein the modules (M1,...,M6) or the main unit (IM) with the respective backplane bus connection are arranged on a backplane bus (RB),
wherein the modules (M1,...,M6) are designed by means of a license key (PK1,...,PK10) to provide a software-based functionality (F1,...,F10) tied to the respective license key (PK1,...,PK10),
**characterised by**
a restoring means (WH) which is designed, after a module (M3) has been replaced by a replacement module (EM), for which the software-based functionality (F3) has not yet been enabled, to recognise the replacement module (EM) without a valid license key (PK1,...,PK10) and then to run through a restoration step, for which purpose a first storage location (S1), a second storage location (S1) and a third storage location (S1) are arranged at different physical locations (01,02,03) on or within the automation station (100),
wherein the restoring means (WH) is designed to restore a license key set (PKS), wherein the license key set (PKS) comprises all license keys (PK1,...,PK10) of the modules (M1,...,M6) of the automation station (100), for restoring the license key set (PKS) the restoring means (WH) is designed to read a first data block (1) from the first storage location (S1), a second data block (2) from the second storage location (S1) or a third data block (3) from the third storage location, wherein the data blocks (1,2,3) comprise data portions (Da,Db) of the license key set (PKS) as follows: the license key set (PKS) is divided into a first part (A) and a second part (B), wherein parity information (P1,P2,P3,P4) is formed from the two parts (A,B) and the data portions (Da,Db) and the parity information (P1,P2,P3,P4) are distributed in a balanced manner over the data blocks (1,2,3), wherein the license key set (PKS) can be restored on the basis of the parity information even if only two of the three data blocks (1,2,3) could be read and the license key (PK3) for the software-based functionality (F3) of the replaced module (M3) retrieved from the license key set (PKS) is assigned to the replacement module (EM) and thus the software-based functionality (F1) is enabled in the replacement module (EM).

3. Automation station (100) according to claim 2, having a field bus interface (101) designed for connection to a higher-level automation system (200) or an engineering station (201), wherein the main unit (IM) is designed to receive and store the license key set (PKS) and/or the data blocks (1,2,3).

4. Method for operating an engineering station (201), which is designed to configure and parameterise an automation station (100) with a main unit (IM) and modules (M1,...,M6) and is designed to generate key data for license keys (PK1,...,PK10), which enable a software-based functionality (F1,...,F10) of a module (M1,...,M6) tied to the respective license key (PK1,...,PK10), wherein in the engineering station (201) a database (Config) is queried and from the database (Config) the information about the configuration and the affiliation of the licensed functionalities (F1,...,F10) to the modules (M1,...,M6) is obtained, wherein with this information a license key set (PKS) is created, wherein the license key set (PKS) comprises all license keys (PK1,...,PK10) of the modules (M1,...,M6) of the automation station (100), for a later restoration of the license key set (PKS) in the automation station (100) the license key set (PKS) is divided into data portions (Da,Db), the license key set (PKS) is divided into a first part (A) and a second part (B), wherein parity information (P1,P2,P3,P4) is formed from the two parts (A,B) and the data portions (Da,Db) and the parity information (P1,P2,P3,P4) are distributed in a balanced manner over a first data block (1), a second data block (2) and a third data block (3),
and in a storage step (D),
the first data block (1) is written to a first storage location (S1) of the automation station (100),
the second data block (2) is written to a second storage location (S2) of the automation station (100) and
the third data block (3) is written to a third storage location (S3) of the automation station (100).

## Revendications

1. Procédé de reproduction de clés (PK1, ..., PK10) de licence dans un poste (100) d'automatisation de constitution modulaire, comprenant une unité (IM) principale ayant une connexion de bus de paroi arrière et une pluralité de modules (M1, ..., M6) ayant également respectivement une connexion de bus de paroi arrière, dans lequel les modules (M1, ..., M6) et respectivement l'unité (IM) principale communiquent entre eux par la connexion de bus de paroi arrière en passant par un bus (RB) de paroi arrière, dans lequel les modules (M1, ..., M6) sont excités au moyen d'une clé (PK1, ..., PK10) de licence pour disposer d'une fonctionnalité (F1, ..., F10) fondée sur du logiciel rattaché aux clés (PK1, ..., PK10) de licence respectives, dans lequel, après le remplacement d'un module (M3) par un module (EM) de remplacement, dans lequel la fonctionnalité (F3) reposant sur le logiciel n'est pas encore déconnectée, on effectue un stade de reproduction,
**caractérisé en ce que** l'on reproduit un ensemble (PKS) de clés de licence, dans lequel l'ensemble (PKS) de clés de licence comprend toutes les clés (PK1, ..., PK10) de licence des modules (M1, ..., M6) du poste (100) d'automatisation, pour la reproduction de l'ensemble (PKS) de clés de licence, on lit un premier bloc (1) de données d'un premier emplacement (S1) de mémoire du poste (100) d'automatisation, un deuxième bloc (2) de données d'un deuxième emplacement (S1) de mémoire du poste (100) d'automatisation et un troisième bloc (3) de données d'un troisième emplacement (S1) de mémoire du poste (100) d'automatisation, dans lequel les blocs (1, 2, 3) de données ont des proportions (Da, Db) de données de l'ensemble (PKS) de clés de licence comme il suit, l'ensemble (PKS) de clés de licence est subdivisé en une première partie (A) et en une deuxième partie (B), dans lequel à partir des deux parties (A, B) des informations (P1, P2, P3, P4) de parité sont formées et les proportions (Da, Db) de données et les informations (P1, P2, P3, P4) de parité sont réparties de manière pondérée sur les blocs (1, 2, 3) de données, dans lequel, à l'aide des informations de parité, on reproduit l'ensemble (PKS) de clés de licence même si l'on ne peut lire que deux des trois blocs (1, 2, 3) de données et on affecte au module (EM) de remplacement la clé (PK3) de licence pour la fonctionnalité (F3) reposant sur un logiciel du module (M3) remplacé et ainsi on déconnecte dans le module (EM) de remplacement la fonctionnalité (F1) reposant sur le logiciel.

2. Poste (100) d'automatisation conformé pour le mode de construction modulaire composé d'une unité (IM) principale ayant une connexion de bus de paroi arrière et d'une pluralité de modules (M1, ..., M6) ayant également respectivement une connexion de bus de paroi arrière, dans lequel les modules (M1, ..., M6) et respectivement l'unité (IM) principale sont montés par la connexion de bus de paroi arrière respective sur un bus (RB) de paroi arrière, dans lequel les modules (M1, ..., M6) sont conformés pour disposer, à l'aide d'une clé (PK1, ..., PK10) de licence, d'une fonctionnalité (F1, ..., F10) reposant sur du logiciel rattaché à la clé (PK1, ..., PK10) de licence respective, **caractérisé par**
un moyen (WH) de reproduction, qui est conformé pour, après un remplacement d'un module (M3) par un module (EM) de remplacement, dans lequel la fonctionnalité (F3) reposant sur du logiciel n'est pas encore déconnectée, identifier le module (EM) de remplacement sans une clé (PK1, ..., PK10) de licence valable et effectuer ensuite un stade de reproduction, à cet effet il est disposé en des emplacements (O1, O2, O3) physiques différents, un premier emplacement (S1) de mémoire, un deuxième emplacement (S1) de mémoire et un troisième emplacement (S1) de mémoire sur ou dans le poste (100) d'automatisation,
dans lequel le moyen (WH) de reproduction est conformé pour produire à nouveau un ensemble (PKS) de clés de licence, dans lequel l'ensemble (PKS) de clés de licence comprend toutes les clés (PK1, ..., PK10) de licence des modules (M1, ..., M6) du poste (100) d'automatisation, pour la reproduction de l'ensemble (PKS) de clés de licence, le moyen (WH) de reproduction est conformé pour lire un premier bloc (1) de données du premier emplacement (S1) de mémoire, un deuxième bloc (2) de données du deuxième emplacement (S1) de mémoire ou un troisième bloc (3) de données du troisième emplacement de mémoire, dans lequel les blocs (1, 2, 3) de données ont des proportions (Da, Db) de données de l'ensemble (PKS) de clés de licence comme il suit : l'ensemble (PKS) de clés de licence est subdivisé en une première partie (A) et en une deuxième partie (B), dans lequel à partir des deux parties (A, B) des informations (P1, P2, P3, P4) de parité sont formées et les proportions (Da, Db) de données et les informations (P1, P2, P3, P4) de parité sont réparties de manière pondérée sur les blocs (1, 2, 3) de données, dans lequel, à l'aide des informations de parité, l'ensemble (PKS) de clés de licence peut être reproduit,
même si seulement deux des trois blocs (1, 2, 3) de données peuvent être lus et la clé (PK3) de licence, récupérée de l'ensemble (PKS) de clés de licence, pour la fonctionnalité (F3) reposant sur du logiciel du module (M3) remplacé est affectée au module (EM) de remplacement et ainsi la fonctionnalité (F1) reposant sur du logiciel est déconnectée dans le module (EM) de remplacement.

3. Poste (100) d'automatisation suivant la revendication 2, comportant une interface (101) de bus de champ conformée pour la connexion à un système (200) d'automatisation supérieur hiérarchiquement ou à un poste (201) d'engineering, dans lequel l'unité (IM) principale est conformée pour recevoir et mettre en mémoire l'ensemble (PKS) de clés de licence et/ou les blocs (1, 2, 3) de données.

4. Procédé pour faire fonctionner un poste (201) d'engineering, qui est conformé pour configurer et pour paramétrer un poste (100) d'automatisation ayant une unité (IM) principale et des modules (M1, ..., M6) et est conformé pour la production de données pour des clés (PK1, ..., PK10) de licence, qui déconnecte une fonctionnalité (F1, ..., F10), reposant sur du logiciel rattaché à la clé (PK1, ..., PK10) de licence respective, d'un module (M1, ..., M6), dans lequel dans le poste (201) d'engineering, on interroge une base (Config) de données et on obtient à partir de la base (Config) de données les informations sur la planification et l'appartenance des fonctionnalités (F1, ..., F10) licenciées aux modules (M1, ..., M6), dans lequel avec ces informations on établit un ensemble (PKS) de clés de licence, dans lequel l'ensemble (PKS) de clés de licence comprend toutes les clés (PK1, ..., PK10) de licence des modules (M1, ..., M6) du poste (100) d'automatisation, pour une reproduction ultérieure de l'ensemble (PKS) de clés de licence dans le poste (100) d'automatisation, on décompose l'ensemble (PKS) de clés de licence en des proportions (Da, Db) de données, l'ensemble (PKS) de clés de licence étant décomposé en une première partie (A) et en une deuxième partie (B), dans lequel à partir des deux parties (A, B), on forme des informations (P1, P2, P3, P4) de parité et on répartit les proportions (Da, Db) de données et les informations (P1, P2, P3, P4) de parité de manière pondérée sur un premier bloc (1) de données, un deuxième bloc (2) de données et un troisième bloc (3) de données,
dans un stade (D) de mise en mémoire,
on inscrit le premier bloc (1) de données dans un premier emplacement (S1) de mémoire du poste (100) d'automatisation,
le deuxième bloc (2) de données dans un deuxième emplacement (S2) de données du poste (100) d'automatisation et
le troisième bloc (3) de données dans un troisième emplacement (S3) de mémoire du poste (100) d'automatisation.
